# EUROPÄISCHE PATENTANMELDUNG

(11) **EP 1 591 902 A2**
(43) Veröffentlichungstag der Anmeldung: **02.11.2005**
(21) Anmeldenummer: 05007531.6
(22) Anmeldetag: 06.04.2005
(51) Int. Cl.: G06F 11/267

(54) **Verfahren zum Betreiben einer Steuereinheit und Steuereinheit**

(30) Priorität: 27.04.2004 DE 102004020564
(71) Anmelder: ArvinMeritor GmbH, 63128 Dietzenbach (DE)
(72) Erfinder: Dubois, Laurent, 72000 Lemans (FR); Raoul, Philippe, 14700 Fresne La Mere (FR); Mersch, Gerhard, 31311 Uetze (DE)
(74) Vertreter: Sties, Jochen

(57) **Zusammenfassung**

Ein Verfahren zum Betreiben einer Steuereinheit (10) weist folgende Schritte auf: Erstens wird eine Einschaltrücksetzung ausgeführt. Dann tritt die Steuereinheit (10) in einen Diagnosemodus ein, in welchem eine Diagnosekommunikation mit einer Diagnoseeinrichtung etabliert werden kann, wenn die Steuereinheit (10) eine Hochfahrnachricht innerhalb einer vordefinierten Zeitspanne nach der Rücksetzung empfängt. Wenn keine Hochfahrnachricht innerhalb der vordefinierten Zeitspanne empfangen wird, tritt die Steuereinheit (10) in einen normalen Betriebsmodus ein. Eine Steuereinheit (10), die nach diesem Verfahren betrieben werden kann, hat einen Speicher (21), der dafür vorgesehen ist, um besondere Daten für einen jeweiligen Fahrzeugtyp zu speichern, ein erstes Kommunikationsmodul (16), das die Kommunikation über ein Bussystem (12) unter einem ersten Protokoll für einen Normalbetrieb der Steuereinheit (10) ermöglicht, und ein zweites Kommunikationsmodul (26), das die Kommunikation über das Bussystem (12) unter einem zweiten Protokoll ermöglicht, um auf den Speicher (21) zuzugreifen.

## Beschreibung

Die Erfindung betrifft ein Verfahren zum Betreiben einer Steuereinheit und eine Steuereinheit, insbesondere für die Anwendung bei Kraftfahrzeugen.

Eine Steuereinheit CU (control unit) steuert den Betrieb eines elektronischen, elektrischen oder elektromechanischen Systems. Bei der Bemühung, die Anzahl von verschiedenen Steuereinheiten, die entwickelt und hergestellt werden müssen, so gering wie möglich zu halten, ist es bekannt, eine "standardisierte" Steuereinheit für eine spezielle Anwendung zu benutzen. Solch eine Steuereinheit hat einen Speicher, der das Speichern von besonderen oder speziellen Daten erlaubt, durch welche die Steuereinheit an ihre speziellen Betriebsbedingungen oder Parameter angepaßt ist, zum Beispiel an den speziellen Fahrzeugtyp, bei dem sie benutzt wird.

Das Benutzen eines löschbaren Speichers zum Speichern der besonderen oder speziellen Daten ermöglicht, die speziellen Daten später zu modifizieren, wenn während der Serienproduktion des Fahrzeugs festgestellt wird, daß die Daten modifiziert werden sollten, um den Betrieb der CU und des jeweiligen Systems an geänderte Parameter anzupassen.

Da die besonderen Daten modifizierbar oder löschbar sind, entsteht das Problem, daß unbefugte Modifikation möglich ist. Eine unbefugte Modifikation könnte entweder ein Ändern der Parameter, die wesentlich für das Ausführen der jeweiligen Funktion sind, oder sogar ein Ausschalten dieser Funktion zur Folge haben. Dies wird im Folgenden mit Bezug .auf eine Tür-Steuereinheit als ein typisches Beispiel beschrieben.

Eine Tür-Steuereinheit DCU (door control unit) steuert insbesondere einen Fensterheberantrieb, durch welchen ein Fenster aus einer geschlossenen Position zu einer offenen Position und umgekehrt verschoben werden kann. In modernen Fahrzeugen sind die Fensterheberantriebe nicht direkt an die Schalter angeschlossen, die von einem Fahrzeuginsassen zum Öffnen oder Schließen eines Fahrzeugfensters betätigt werden. Statt dessen sind die Fensterheberantriebe (und möglicherweise die Schalter) an ein Bussystem angeschlossen, über welches diese Bauteile miteinander kommunizieren. Ein Beispiel von einem Bussystem ist ein CAN Bus.

Zusätzlich zum einfachen Öffnen und Schließen des jeweiligen Fensters wird die DCU immer häufiger dazu benutzt, zusätzliche Funktionen bereitzustellen, welche das jeweilige Fenster und/oder die jeweilige Fahrzeugtür betreffen. Ein Beispiel solch einer Funktion ist eine Einklemmschutzfunktion, die verhindert, daß Teile eines Fahrzeuginsassen zwischen einem Fensterrahmen und dem jeweiligen Fenster eingeklemmt werden, wenn das Fenster zu seiner geschlossenen Position hin angetrieben wird. Die Einklemmschutzfunktion kann auf der Basis der maximal zulässigen Antriebskraft (oder des maximal zulässigen Stroms) erzielt werden, die (oder der) für das Fenster (oder einen Motor des Fensterheberantriebs) während des Schließens des Fensters verwendet wird. Ein Überschreiten der maximal zulässigen Antriebskraft (oder des maximal zulässigen Stroms) wird als ein unzulässiger Zustand angesehen, der möglicherweise durch das Fenster verursacht wurde, das auf ein Hindernis in seiner Bahn stößt, zum Beispiel auf einen Körperteil eines Fahrzeuginsassen. Dann wird das Schließen des Fensters sofort gestoppt.

Die Details einer solchen Einklemmschutzfunktion hängen von bestimmten Parametern ab, welche für jeden Fahrzeugtyp speziell sind. Ein Parameter ist die Reibung, welche beim Verschieben des Fensters in seinem Rahmen auftritt. Ein anderer Parameter ist die Antriebskraft, welche von den jeweiligen Fahrzeugherstellern als zulässig angesehen wird. Diese Parameter sind in einem Speicher der DCU gespeichert. Dies erlaubt, weitgehend standardisierte DCUs herzustellen, welche später individuell für den jeweiligen Fahrzeugtyp durch das Speichern der besonderen Daten für den Fahrzeugtyp in dem Speicher individuell angepaßt werden. Dies erlaubt ferner, die besonderen Daten später zu modifizieren, wenn während der Serienproduktion des Fahrzeugs festgestellt wird, daß die Daten modifiziert werden sollten, um den Betrieb der DCU und des Fensterheberantriebs an geänderte Parameter anzupassen.

Sollten die besonderen Daten modifiziert oder gelöscht werden durch unbefugten oder ungewollten Zugriff, könnte solch ein Zugriff entweder ein Ändern der Parameter, die wesentlich für das Ausführen der jeweiligen Funktion sind, oder sogar ein Ausschalten dieser Funktion zur Folge haben. In dem oben genannten Beispiel der DCU ist das Ausschalten der Einklemmschutzfunktion eindeutig unerwünscht.

Im Stand der Technik sind Bemühungen gemacht worden, einen Zugriff auf den Speicher nur zu ermöglichen, wenn ein bestimmter Diagnosecode über das Bussystem gesendet wurde. Jedoch bleibt das Risiko eines unbefugten oder ungewollten Zugriffs auf den Speicher aus zwei Gründen. Erstens bleibt das Risiko, daß eine Nachricht, die über das Bussystem gesendet und für ein anderes Bauteil als die jeweilige CU bestimmt ist, durch die jeweilige CU fälschlicherweise als ein Diagnosecode interpretiert wird. Das ist zurückzuführen auf die Tatsache, daß mehrere Bauteile über das Bussystem kommunizieren, was zur Folge hat, daß eine Vielzahl von verschiedenen Nachrichten über das Bussystem gesendet werden. All diese Nachrichten werden von der CU "mitgehört". Zweitens bleibt das Risiko, daß die speziellen Parameter (in dem obigen Beispiel in Bezug auf die Einklemmschutzfunktion) unbeabsichtigt modifiziert werden, wenn aus Wartungszwecken auf die CU zugegriffen wird. Ein solcher Zugriff kann ausgeführt werden, um einen Fehlerspeicher zu lesen, in dem Daten gespeichert sind, die eine Funktionsstörung oder unübliche Betriebszustände anzeigen, oder zum Updaten des Programms, das den Betrieb des Systems regelt, das mit der CU verbunden ist.

Die Aufgabe der Erfindung ist, den Zugriff auf spezielle Daten der CU zuverlässig nur befugten Personen zu erlauben und jeglichen ungewollten oder unbefugten Zugriff auf Daten zu verhindern, welche als relevant für den korrekten Betrieb der CU und der Systeme angesehen ist, die von der CU kontrolliert werden.

Zu diesem Zweck sieht die Erfindung ein Verfahren zum Betreiben einer Steuereinheit (CU) vor, das die folgenden Schritte aufweist: Erstens wird eine Einschaltrücksetzung ausgeführt. Dann tritt die CU in einen Diagnosemodus ein, in dem eine Diagnosekommunikation mit einer Diagnosevorrichtung etabliert werden kann, falls die CU eine Hochfahrnachricht innerhalb einer vordefinierten Zeitspanne nach der Rücksetzung empfängt. Wenn keine Hochfahrnachricht innerhalb der vordefinierten Zeitspanne empfangen wird, tritt die CU in einen normalen Betriebsmodus ein. Die Erfindung basiert auf der Idee, zwei verschiedene Betriebsmodi der CU zu benutzen. Im normalen Betriebsmodus arbeitet die CU auf ihre konventionelle Weise. In diesem Betriebsmodus kann keine Diagnosekommunikation aufgebaut werden, und es ist kein Zugriff auf die besonderen Daten möglich. In dem Diagnosemodus ist der Zugriff auf die besonderen Daten möglich. Ein ungewollter Eintritt in den Diagnosemodus wird durch zwei Dinge verhindert. Erstens muß eine Hochfahrnachricht nach der Einschaltrücksetzung empfangen werden. Dies hindert die CU daran, während des Normalbetriebs in den Diagnosemodus einzutreten, da eine Einschaltrücksetzung (die definiert ist durch eine Unterbrechung der Stromversorgung für einige Sekunden) nur bei seltenen Gelegenheiten ausgeführt ist. Zweitens muß die Hochfahrnachricht innerhalb einer vordefinierten (typischerweise sehr kurzen) Zeitspanne nach der Einschaltrücksetzung empfangen werden. Dies verringert das Risiko von einem ungewollten Eintritt in den Diagnosemodus weiter. Zusätzliche Sicherheit gegen ungewollten oder unbefugten Zugriff auf die besonderen Daten wird durch die Benutzung eines Kommunikationsprotokolls für den Diagnosemodus erreicht, das sich von dem Kommunikationsprotokoll unterscheidet, das im Betriebsmodus benutzt wird. Da das Kommunikationsprotokoll für den Diagnosemodus nicht für andere Zwecke benutzt wird, müssen der Fahrzeughersteller und Reparatur- oder Wartungswerkstätten keinen Zugriff auf dieses Kommunikationsprotokoll haben, wobei dadurch der Zugriff auf die besonderen Daten verhindert wird.

Die Erfindung sieht eine Steuereinheit mit einem Speicher vor, der dafür vorgesehen ist, um besondere Daten für einen jeweiligen Fahrzeugtyp zu speichern, einem ersten Kommunikationsmodul, das die Kommunikation über ein Bussystem unter einem ersten Protokoll für einen Normalbetrieb der CU ermöglicht, und einem zweiten Kommunikationsmodul, das die Kommunikation über das Bussystem unter einem zweiten Protokoll ermöglicht, um auf den Speicher zuzugreifen. Hinsichtlich der Vorteile, die mit dieser CU erreicht sind, wird Bezug genommen auf die obigen Erläuterungen.

Vorteilhafte Ausgestaltungen dieser Erfindung sind in den Unteransprüchen definiert.

Die Erfindung wird mit Bezug auf eine beispielhafte Ausführungsform beschrieben, die in den beigefügten Zeichnungen gezeigt ist. In den Zeichnungen zeigen:
- Figur 1 schematisch eine CU gemäß der Erfindung;
- Figur 2 eine schematische Ansicht eines Fahrzeugs, das mit der in Figur 1 gezeigten CU versehen ist; und
- Figur 3 ein Blockdiagramm, das Schritte des Verfahrens gemäß der Erfindung zeigt.

Die Erfindung wird nachstehend mit Bezug auf eine Tür-Steuereinheit DCU (door control unit) beschrieben. Jedoch ist es offensichtlich, daß die Erfindung auch andere Arten von Steuereinheiten betrifft.

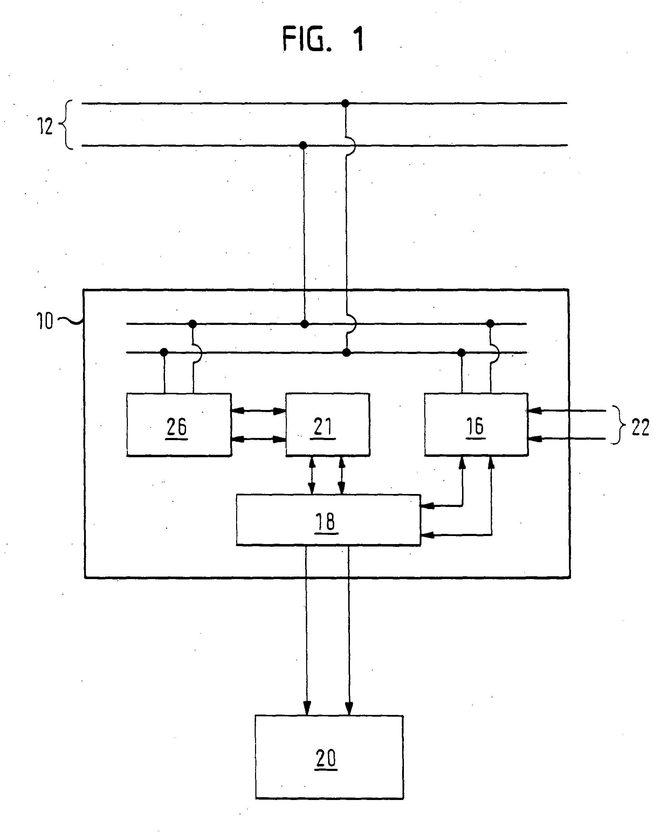

Figur 1 zeigt schematisch eine DCU 10, die in Fahrzeugen für das Steuern und Betreiben insbesondere eines Fensterheberantriebs benutzt wird. Andere Funktionen könnten das Steuern eines Zentralverriegelungssystems CC (central closing system) für die Fahrzeugtüren oder das Steuern von Fahrzeuginnenlichtsystemen aufweisen.

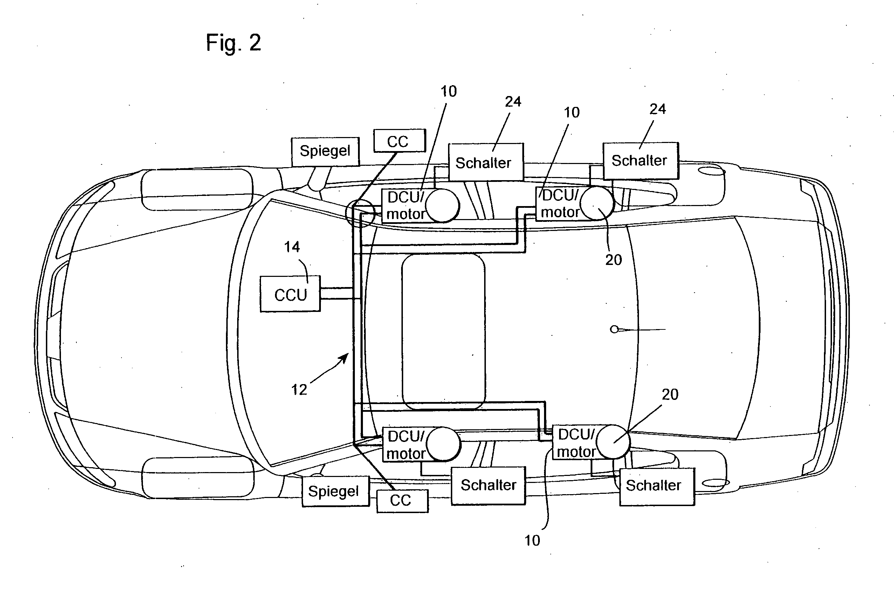

Die Tür-Steuereinheit 10 ist verbunden mit einem Bussystem 12, welches vorzugsweise ein LIN (Lokal Interconnect Network) Bus ist. Über den LIN Bus kommunizieren andere Steuereinheiten miteinander, zum Beispiel eine zentrale Steuereinheit CCU (Central Control Unit) 14 oder DCUs von anderen Fahrzeugtüren (siehe Figur 2). Für diese Kommunikation wird ein LIN Protokoll benutzt. Folglich weist die DCU ein erstes Kommunikationsmodul 16 auf, welches unter dem LIN Protokoll kommunizieren kann und welches verbunden ist mit einem Steuermodul 18, das den Betrieb des Fensterheberantriebs, insbesondere des Motors 20 (siehe Figur 2), der ein verschiebbares Fenster antreibt, steuert.

Ferner weist die DCU 10 einen Speicher 21 auf, vorzugsweise ein EEPROM, der die Daten enthält, die besonders oder speziell für den jeweiligen Fahrzeugtyp sind. Für Erläuterungszwecke ist im Folgenden angenommen, daß der Speicher 21 die Daten enthält, welche die Einzelheiten der Einklemmschutzfunktion des Fensterheberantriebs angeben, insbesondere die maximal erlaubte Schließkraft, die für das Fenster verwendet wird. Jedoch könnte der Speicher 21 andere spezielle Daten enthalten. Schließlich weist die DCU 10 einen Eingang 22 für Schalter 24 auf, die betätigt werden können durch einen Fahrzeuginsassen, der das Fenster öffnen oder schließen möchte.

Es wird darauf hingewiesen, daß das erste Kommunikationsmodul 16 nur unter dem LIN Protokoll kommunizieren kann und nur für den Normalbetrieb der DCU vorgesehen ist. "Normalbetrieb" umfaßt das Öffnen und Schließen des Fensters und bestimmte Wartungsfunktionen, zum Beispiel das Lesen des Inhalts eines Fehlerspeichers, der Teil des Steuermoduls 18 ist.

Die DCU 10 enthält ferner ein zweites Kommunikationsmodul 26, das ebenfalls mit dem LIN Bus 12 verbunden ist, aber nur unter einem SCI (Serial Connection Interface) Protokoll kommunizieren kann. Das zweite Kommunikationsmodul 26 ist verbunden mit dem Speicher 21, so daß sein Inhalt gelesen, modifiziert, gelöscht oder auf sonstige Weise geändert werden kann.

Unter Normalbedingungen (Starten des Fahrzeugs durch Starten der Zündung und nachfolgendem Betrieb des Fahrzeugs) läuft die Kommunikation ausschließlich über das erste Kommunikationsmodul 16. Das zweite Kommunikationsmodul 26 ist inaktiv und kann deswegen nicht über den LIN Bus 12 angesprochen werden.

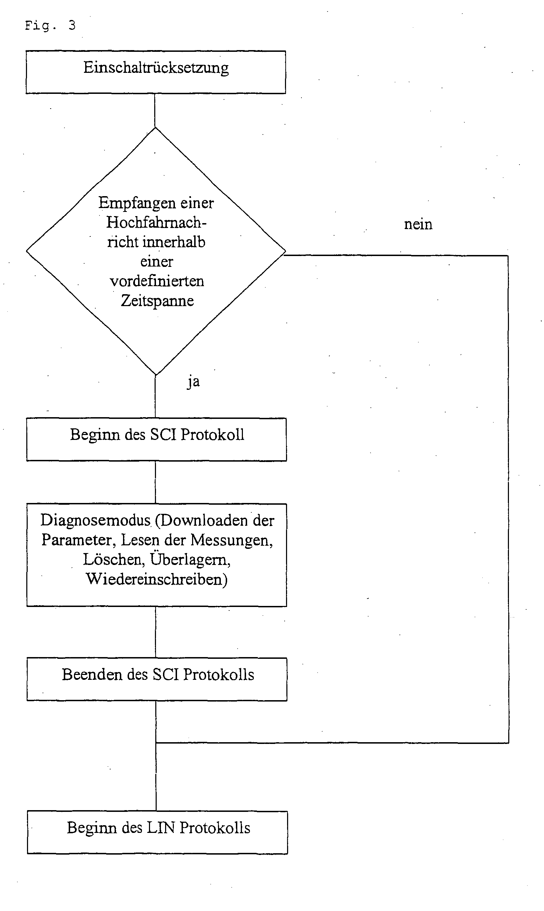

Sollte eine Einschaltrücksetzung ausgeführt werden (siehe Figur 3), die das Unterbrechen der Stromversorgung von der Batterie für eine Zeit umfaßt, die ausreicht sicherzustellen, daß kein Strom in dem elektrischen System bleibt, und anschließend das Wiederherstellen der Stromversorgung, "lauscht" das zweite Kommunikationsmodul 26 für eine vordefinierte Zeitspanne, ob eine Hochfahrnachricht empfangen wird oder nicht. Eine solche Hochfahrnachricht würde von einer externen Diagnoseeinrichtung gesendet werden, die temporär mit dem LIN Bus 12 verbunden ist. Die vordefinierte Zeitspanne ist generell so kurz wie möglich und gerade lang genug, um der Diagnoseeinrichtung zu ermöglichen, die Hochfahrnachricht zu senden. Eine Zeitspanne von 200 ms oder sogar weniger sollte ausreichend sein.

Sollte innerhalb der vordefinierten Zeitspanne nach der Einschaltrücksetzung keine Hochfahrnachricht empfangen werden, bleibt das zweite Kommunikationsmodul 26 inaktiv, und das erste Kommunikationsmodul 16 beginnt den Betrieb. Die DCU bleibt in ihrem normalen Betriebszustand.

Sollte innerhalb der vordefinierten Zeitspanne eine Hochfahrnachricht empfangen werden, beginnt das zweite Kommunikationsmodul das SCI Protokoll, und der Diagnoseeinrichtung wird der Zugriff unter dem SCI Protokoll auf die Daten ermöglicht, die in dem Speicher 21 enthalten sind, um der Diagnoseeinheit zu ermöglichen, diese Daten falls erforderlich zu modifizieren. Die DCU 10 ist nun in einem Diagnosemodus.

Der Zugriff auf den Speicher 21 wird unterbrochen und der Diagnosemodus wird beendet, wenn für eine vorbestimmte Zeitspanne keine Diagnosedaten von der Diagnoseeinrichtung empfangen werden. Es könnte auch vorgesehen werden, daß die Diagnoseeinheit in vordefinierten Intervallen Diagnosesitzung-offenhalten-Nachrichten sendet, die dem zweiten Kommunikationsmodul zu verstehen geben, daß der Diagnosemodus weiterzuführen ist. Der Diagnosemodus würde dann beendet werden, wenn für eine vorbestimmte Zeitspanne keine Diagnosesitzung-offenhalten-Nachricht empfangen wird. Der Diagnosemodus könnte auch beendet werden als Antwort auf den Empfang einer expliziten Diagnosemodus-beenden-Nachricht.

Nach der Beendigung des Diagnosemodus wird der Normalbetrieb der DCU (über das erste Kommunikationsmodul) freigegeben, und das LIN Protokoll wird gestartet.

Anstatt das zweite Kommunikationsmodul nach einer Einschaltrücksetzung nach der Hochfahrnachricht "lauschen" zu lassen, könnte vorgesehen sein, daß das zweite Kommunikationsmodul in das erste Kommunikationsmodul integriert ist, um vom ersten Kommunikationsmodul nach dem Empfang der Hochfahrnachricht freigegeben oder gestartet zu werden. Ferner könnte die Hochfahrnachricht, anstelle einer speziellen Nachricht, die über den LIN Bus 12 gesendet wird, ein vordefinierter Zustand des Eingangs der DCU sein.

Es ergibt sich aus der obigen Beschreibung, daß der Weg und die Mittel, durch welche der Inhalt des Speichers 21 vor unbefugtem und/oder ungewolltem Zugriff geschützt ist, genauso für andere Steuereinheiten anwendbar ist, zum Beispiel Motor-Steuereinheiten, Schiebedach-Steuereinheiten, Klappdach-Steuereinheiten etc.

### Bezugszeichenliste

- 10:: Tür-Steuereinheit
- 12:: LIN Bus
- 14:: zentrale Steuereinheit
- 16:: erstes Kommunikationsmodul
- 18:: Steuermodul
- 20:: Motor
- 21:: Speicher
- 22:: Eingang
- 24:: Schalter
- 26:: zweites Kommunikationsmodul

## Patentansprüche

1. Verfahren zum Betreiben einer Steuereinheit, welches die folgenden Schritte aufweist:
- eine Einschaltrücksetzung wird ausgeführt;
- wenn die Steuereinheit (10) eine Hochfahrnachricht innerhalb einer vordefinierten Zeitspanne nach der Rücksetzung empfängt, tritt die Steuereinheit (10) in einen Diagnosemodus ein, in welchem eine Diagnosekommunikation mit einer Diagnoseeinrichtung etabliert werden kann;
- wenn keine Hochfahrnachricht innerhalb der vordefinierten Zeitspanne empfangen wird, tritt die Steuereinheit (10) in einen normalen Betriebsmodus ein.

2. Verfahren nach Anspruch 1, **dadurch gekennzeichnet, daß** zur Kommunikation mit der Steuereinheit (10) im normalen Betriebsmodus ein erstes Protokoll benutzt wird und zur Kommunikation mit der Steuereinheit (10) im Diagnosemodus ein zweites Protokoll benutzt wird, das sich von dem ersten Protokoll unterscheidet.

3. Verfahren nach Anspruch 2, **dadurch gekennzeichnet, daß** das erste Protokoll ein LIN Protokoll ist.

4. Verfahren nach Anspruch 2 oder Anspruch 3, **dadurch gekennzeichnet, daß** das zweite Protokoll ein SCI Protokoll ist.

5. Verfahren nach einem der vorhergehenden Ansprüche, **dadurch gekennzeichnet, daß** die Steuereinheit (10) nach dem Eintritt in den Diagnosemodus prüft, ob die Diagnosedaten weiterhin empfangen werden oder nicht, und den Diagnosemodus beendet, nachdem für eine vordefinierte Zeitspanne keine Diagnosedaten empfangen wurden.

6. Verfahren nach einem der vorhergehenden Ansprüche, **dadurch gekennzeichnet, daß** die Steuereinheit (10) nach dem Eintreten in den Diagnosemodus prüft, ob eine Diagnosesitzung-offenhalten-Nachricht periodisch empfangen wird oder nicht, und den Diagnosemodus beendet, wenn für eine vordefinierte Zeitspanne keine Diagnosesitzung-offenhalten-Nachricht empfangen wird.

7. Verfahren nach einem der vorhergehenden Ansprüche, **dadurch gekennzeichnet, daß** die Steuereinheit (10) den Diagnosemodus nach Empfang einer Diagnosemodus-beenden-Nachricht beendet.

8. Verfahren nach einem der vorhergehenden Ansprüche, **dadurch gekennzeichnet, daß** der Diagnosemodus ermöglicht, die Betriebsparameter der Steuereinheit (10) zu modifizieren.

9. Verfahren nach Anspruch 8, **dadurch gekennzeichnet, daß** die Steuereinheit (10) den Betrieb eines Systems steuert, das einer Fahrzeugtür zugeordnet ist, und daß die Betriebsparameter Parameter einer Antiklemmschutzfunktion aufweisen.

10. Verfahren nach einem der vorhergehenden Ansprüche, **dadurch gekennzeichnet, daß** ein Bussystem (12) zur Kommunikation mit der Steuereinheit (10) benutzt wird.

11. Verfahren nach Anspruch 10, **dadurch gekennzeichnet, daß** das Bussystem (12) ein LIN (local interconnect network) Bus ist.

12. Verfahren nach einem der vorhergehenden Ansprüche, **dadurch gekennzeichnet, daß** die Hochfahrnachricht über das Bussystem (12) gesendet wird.

13. Verfahren nach einem der Ansprüche 1 bis 11, **dadurch gekennzeichnet, daß** die Hochfahrnachricht definiert ist von einem speziellen Zustand des Eingangs der Steuereinheit (10).

14. Steuereinheit mit einem Speicher (21), der dafür vorgesehen ist, um besondere Daten für einen jeweiligen Fahrzeugtyp zu speichern, einem ersten Kommunikationsmodul (16), das die Kommunikation über ein Bussystem (12) unter einem ersten Protokoll für einen Normalbetrieb der Steuereinheit (10) ermöglicht, und einem zweiten Kommunikationsmodul (26), das die Kommunikation über das Bussystem (12) unter einem zweiten Protokoll ermöglicht, um auf den Speicher (21) zuzugreifen.

15. Steuereinheit nach Anspruch 14, **dadurch gekennzeichnet, daß** der Speicher (21) ein EEPROM ist.

16. Steuereinheit nach Anspruch 14, **dadurch gekennzeichnet, daß** der Speicher (21) ein Flash Controller ist, der ein EEPROM simulieren kann.

17. Steuereinheit nach einem der Ansprüche 14 bis 16, **dadurch gekennzeichnet, daß** sie eine Tür-Steuereinheit ist.
